# EUROPÄISCHE PATENTSCHRIFT

(11) **EP 3 224 161 B1**
(45) Veröffentlichungstag und Bekanntmachung des Hinweises auf die Patenterteilung: **14.03.2018**
(21) Anmeldenummer: 15794924.9
(22) Anmeldetag: 16.11.2015
(51) Int. Cl.: B65G 1/04, B65G 1/06, B65G 1/137

(54) **VERFAHREN ZUM BETREIBEN EINES FACHBODENREGALLAGERS UND ENTSPRECHENDES FACHBODENREGALLAGER**
METHOD FOR OPERATING A MODULAR SHELVING RACK WAREHOUSE AND CORRESPONDING MODULAR SHELVING RACK WAREHOUSE
PROCÉDÉ D'EXPLOITATION D'UN ENTREPÔT À RAYONNAGES À TABLETTES ET ENTREPÔT À RAYONNAGES À TABLETTES CORRESPONDANT

(30) Priorität: 25.11.2014 DE 102014117235
(43) Veröffentlichungstag der Anmeldung: 04.10.2017
(73) Patentinhaber: Dematic GmbH, 63150 Heusenstamm (DE)
(72) Erfinder: MEURER, Hans Christoph, 64380 Rossdorf (DE)
(74) Vertreter: Moser Götze & Partner Patentanwälte mbB
(86) Internationale Anmeldenummer: PCT/EP2015/076694
(87) Internationale Veröffentlichungsnummer: WO 2016/083179

(56) Entgegenhaltungen:
- EP-A2- 1 452 462
- EP-A2- 1 857 381
- EP-A2- 1 964 792
- WO-A1-2008/089980
- WO-A1-2010/090515
- DE-A1- 10 105 706
- DE-A1- 19 726 593
- DE-U1-202004 008 679
- NL-C- 2 003 022

## Beschreibung

Die Erfindung betrifft ein Verfahren zum Betreiben eines Lagers, bei dem ein Fachbodenregallager mit einer Vielzahl von Ebenen und Stellplätzen manuell von Kommissionierern mit Waren ver- und entsorgt wird und ein entsprechendes Fachbodenregallager.
Beim Fachbodenregallager werden die Lagereinheiten auf Regalböden, die sogenannten Fachböden gelegt. Somit können Artikel oder Waren unterschiedlichster Art ohne Ladehilfsmittel gelagert werden.
Meist werden solche Lager manuell bedient, d.h. nach dem Mann zur Ware Prinzip. Somit sind bei geringen Investitionskosten Zugriffe auf jeden Artikel möglich, so dass sich solche Lager gut für Kommissionieraufgaben eignen.
Allerdings bringt dies bei einem großen Warensortiment eine große Grundfläche und somit einen hohen Personalaufwand sowie lange Wegstrecken für die Kommissionierer mit sich.

Die DE 60 2004 007 965 T2 offenbart ein Verfahren nach dem Oberbegriff des Anspruchs 1 sowie ein manuelles Fachbodenregallager mit einer Vielzahl von Ebenen und Stellplätzen, die manuell von Kommissionierern mit Waren ver- und entsorgt werden, wobei in einer zentralen Gasse zwischen den Regalen einer Ebene jeweils mindestens eine Auf- und Abgabestation angeordnet ist, wobei die in unterschiedlichen Ebenen angeordneten Auf- und Abgabestationen jeweils mittels eines Vertikalförderers untereinander verbunden sind.

Die Gebrauchsmusterschrift DE 20 2004 008 679 U1 offenbart beispielsweise eine Lagereinrichtung, welche aus einem Lagerbereich, einem Kommissionierbereich und einer Puffereinrichtung besteht, die so angeordnet sind, dass der Lagerbereich von Regalbediengeräten versorgt wird. Hier bewegen sich die Kommissionierer allerdings nicht durch den Lagerbereich, sondern kommissionieren die von Regalbediengeräten aus dem Lagerbereich entnommenen Waren an festen Kommissionierstationen. Diese Kommissionierstationen sind außerhalb des Lagerbereichs angeordnet.
Aufgabe der Erfindung ist es daher, eine Möglichkeit bereitzustellen, mit der in solche großen Fachbodenregallager der Personalaufwand und auch die Wegstrecken verringert werden können.
Diese Aufgabe wird durch das in Anspruch 1 wiedergegebene Verfahren bzw. dem in Anspruch 7 angegebenen Lager gelöst.

Erfindungsgemäß ist erkannt worden, dass wenn an mindestens einem zentralen Übergabepunkt zwischen den Regalen einer Ebene eine Aufgabe und Abnahme von Waren möglich ist, wobei die in unterschiedlichen Ebenen angeordneten Übergabepunkte jeweils untereinander sowie mit einem gemeinsamen Lagerein- und Ausgang fördertechnisch verbunden sind, die Wegstrecken für die Kommissionierer verkürzt werden, da diese nun nicht mehr das Lager verlassen müssen, um ihre gesammelten Waren abzugeben bzw. einzulagernde Waren abzuholen, sondern diese an den Übergabepunkten abgeben bzw. aufnehmen können. Somit sinkt auch der Personalbedarf.

Ferner erlaubt die Erfindung die Anbindung mehrerer Ebenen des Lagers auf eine Weise, die den Bewegungspeilraum der Kommissionierer nicht einschränkt, da keine Fördertechnik in Form von Rampen oder Ein- und Auslagerstrecken die Lagerbereiche zerschneidet und teilt. Ein Kommissionierer muss also nicht über eine Fördertechnik hinwegsteigen oder Umwege gehen etc.

Je nach Größe des Lagers - es kann sich um Fachbodenregallager mit mehr als hunderttausend und bis zu einer Million Stellplätzen handeln - können mehrere Übergabepunkte pro Ebene in einer zentralen Gasse beabstandet angeordnet sein, so dass Übergabepunkte für bestimmte Lagerblöcke vorhanden sind und die Wege kurz bleiben. Somit verkürzen sich auch die Wechselzeiten.

Zentrale Gasse heißt ein zwischen Regalblöcken angeordnete Gasse, von der wiederum einzelne Gassen zwischen einzelnen Regalen abgehen.

In einer besonders bevorzugten Ausführungsform der Erfindung sind zur Verbindung der Übergabepunkte Vertikalförderer, insbesondere Heber vorgesehen. Durch die senkrechte oder fast senkrechte Ausrichtung benötigen diese wenig Platz und behindern die Kommissionierer am wenigsten. Heber sind ganz besonders bevorzugt, da die einfach im Aufbau, kostengünstig und gut be- und entladbar sind.

Die Heber können beliebig viele Lagerebenen anschließen. Dabei sind sie in den gesamten Förderfluss des Lagers integriert. Mit anderen Worten, sie sind nicht nur Bestandteil von Kommissioniereinrichtungen, in denen damit die Anordnung von Behältern verändert wird, sondern die Waren an sich sind über die Heber in den Förderfluss der gesamten Anlage im Sinne eines "Routing" eingebunden.

Dagegen werden in der DE 60 2004 007 965 T2 nur einzelne Behälter im Sinne einer Kommissionieranordnung angehoben und wieder abgesenkt.

Vorzugsweise werden solche Vertikalförderer eingesetzt, die gleichzeitig zwei Waren tragen können, d.h. deren Liftplattform zwei Stellplätze aufweist. Sinnvollerwiese sind diese zwei Stellplätze zu dem unabhängig voneinander be- und entladbar, z.B. durch unabhängige Förderer auf der Liftplattform. Somit kann der Heber insbesondere gleichzeitig Waren in der jeweiligen Ebene aufnehmen und abgeben.

Nach der Erfindung erfolgt die Waren-Abgabe bzw. Aufnahme vom bzw. ins Lager über einen gemeinsamen Lagerein- und Ausgang, d.h. Ein- und Auslagerförderer. Dieser sollte auch in einer solchen Ein- und Auslagerebene die Kommissionierer nicht behindern. Daher ist er behinderungsfrei angeordnet. Dies kann z.B. durch seine Anbringung an der Decke erfolgen.
Da die Heber in den gesamten Förderfluss der Anlage integriert sind, muss auch nicht zwingend in jeder Ebene ein fördertechnischer Lagereingang bzw. Ausgang angeordnet sein. Es kann z.B. nur in jeder vierten Ebene eine Anbindung erfolgen.

Erfindungsgemäß sind die Übergabepunkte als Auf- und Abgabestation ausgebildet, über die die Vertikalförderer verbunden sind. Die Auf- und Abgabestation sind also übereinander angeordnet. Sie erlauben dem Kommissionier die Abgabe der gesammelten Waren und die Aufnahme von einzulagernden Waren. Die Waren sind dabei nicht notwendigerweise in Behältern gelagert, sondern es können die Waren an sich gehandhabt werden.

Die Vertikalförderer werden wiederum über mindestens einen gemeinsamen Ein- und Auslagerförderer (z.B. in der Ein- und Auslagerebene) ver- und entsorgt.

Damit die Tätigkeit der Kommissionierers und auch die Förderung des Vertikalförderers voneinander entkoppelt sind, ist es vorgesehen, dass die Auf- und Abgabestationen eingangs- und ausgangseitig des Vertikalförderers jeweils einen Puffer-Förderer aufweisen. Mit anderen Worten, die Auf- und Abgabestationen weisen einen (kurzen) Auslagerförderer und einen (kurzen) Einlagerförderer auf, die linear ausgerichtet sind und zwischen denen der Vertikalförderer (in der jeweiligen Ebene) angeordnet ist. Diese Förderstiche sind somit gut für alle Kommissionierer erreichbar und erlauben eine ungebremste Tätigkeit.

Die Auf- und Abgabestationen können mit Scannern etc. ausgerüstet sein, so dass eine Ware nach der Abgabe vom Warenmanagementsystem, Leitsoftware usw. erkannt und dem Bedarf entsprechend weiterbehandelt wird. Analog können die Auf- und Abgabestationen mit Ausgaben, Anzeigen etc. ausgerüstet sein, die nach Abgabe eines Artikels vom Vertikalförderer an den Puffer, dem Kommissionier Anweisungen geben, welche Ware wohin muss.

Weitere Merkmale und Einzelheiten der Erfindung ergeben sich aus der nachfolgenden Beschreibung der Zeichnung. Es zeigen:

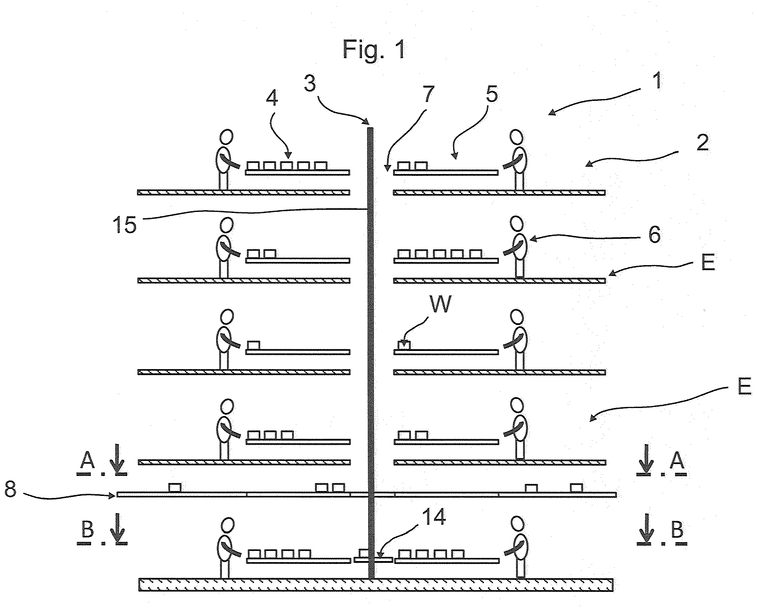

Fig. 1 einen schematischen Längsschnitt durch ein Fachbodenregallager im Bereich der Auf- und Abgabestationen;
Fig. 2 eine schematische Draufsicht auf den Querschnitt entlang der Linie A-A aus Figur 1 und
Fig. 3 eine schematische Draufsicht auf den Querschnitt entlang der Linie B-B aus Figur 1.

In den Figuren ist ein als Ganzes mit 1 bezeichnetes Verteilzentrum mit einem zentralen Fachbodenregallager 2 als Warenlager dargestellt.

Das Fachbodenregallager 2 umfasst eine Vielzahl von übereinander liegenden Ebenen E mit einer Vielzahl von Fachbodenregalen 9, die wiederum eine Vielzahl von übereinander und nebeneinander angeordneten Stellplätzen für Waren W aufweisen.

Die nebeneinander liegenden Fachbodenregale 9 sind mittels normaler Gassen 12 voneinander getrennt und in Lagerbereiche B getrennt zwischen denen eine zentrale Gasse 13 verläuft, von der also die normalen Gassen 12 zwischen den Regalen 9 abgehen.

Um das Fachbodenregallager 2 bzw. die Fachbodenregale 9 zu bedienen, sind Kommissionierer 6 vorgesehen, die das Lager weitgehend manuell mit Waren W verund entsorgen.

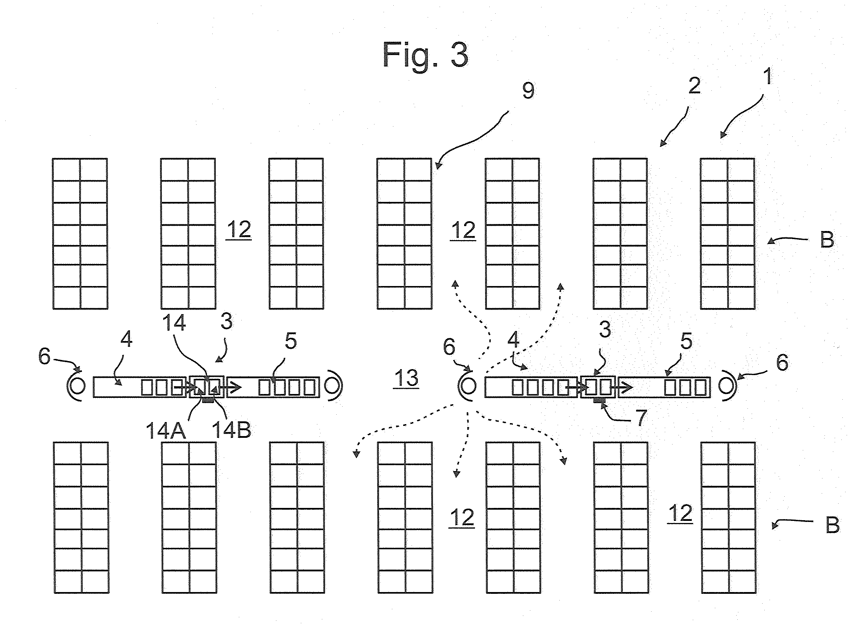

Dazu bewegen sich diese durch die Gassen 12, 13 und nehmen Waren W aus den Stellplätzen der Fachbodenregale 9 bzw. legen Waren W in diese hinein (vgl. gestrichelte Pfeile in Figur 3). Dazu werden die Kommissionierer 6 in bekannter Weise mit Aufträgen versorgt, z.B. mittels tragbaren Bedienteilen, die mit der Lagersteuerung und Lagerverwaltung kommunizieren sowie über Sprache oder Anzeigen den Kommissionierer 6 instruieren und dessen Eingaben entgegen nehmen.

Damit die Kommissionierer 6 aufgrund der Größe des Fachbodenregallagers 2 (mehrere hunderttausend Stellplätze) keine zu langen Wegstrecken zurücklegen müssen, sind an zentralen Übergabepunkten 3a zwischen den Regalen 9 einer Ebene E eine Aufgabe und Abnahme von Waren W vorgesehen.

Dazu sind an den zentralen Übergabepunkten 3a jeweils Auf- und Abgabestationen 3 angeordnet. Der Zwischenraum in den zentralen Gassen 13 ist in den Ebenen E frei, so dass die Kommissionierer 6 keinen eingeschränkten Bewegungspeilraum haben, da keine Fördertechnik in Form von Rampen oder Ein- und Auslagerstrecken die Lagerbereiche zerschneidet und teilt. Ein Kommissionierer 6 muss also nicht über eine Fördertechnik hinwegsteigen oder größere Umwege gehen etc.

Üblicherweise werden mehrere Übergabepunkte 3a bzw. Auf- und Abgabestationen 3 pro Ebene E vorgesehen sein, die in der zentralen Gasse 13 beabstandet sind, um die Wegzeiten und Wegstrecken der Kommissionierer zu optimieren.

Zur Verbindung der Übergabepunkte 3a bzw. Auf- und Abgabestationen 3 verschiedener übereinander liegender Ebenen sind Vertikalförderer in Form von Hebern 7 vorgesehen. Durch die senkrechte oder fast senkrechte Ausrichtung benötigen diese wenig Platz und behindern die Kommissionierer 6 am wenigsten. Heber 7 sind zudem einfach im Aufbau, kostengünstig und gut be- und entladbar.

Damit die Tätigkeit der Kommissionierers 6 und auch die Förderung des Hebers 7 voneinander entkoppelt sind, weisen die Auf- und Abgabestationen 3 eingangs- und ausgangseitig des Hebers 7 jeweils einen Puffer-Förderer 4, 5 auf.

Die Auf- und Abgabestationen weisen einen kurzen Auslagerförderer 5 und einen kurzen Einlagerförderer 4 auf, die linear ausgerichtet sind und zwischen denen der Heber 7 (in der jeweiligen Ebene) angeordnet ist. Diese Förderstiche 4, 5 sind somit gut für alle Kommissionierer 6 erreichbar und erlauben eine ungebremste Tätigkeit.

Die Heber 7 können gleichzeitig zwei Waren W tragen, d.h. deren Liftplattform 14 weist zwei Stellplätze 14A, B auf. Diese zwei Stellplätze 14A, B sind zudem unabhängig voneinander durch unabhängige Förderer be- und entladbar. Somit kann der Heber 7 gleichzeitig Waren W in der jeweiligen Ebene W aufnehmen und abgeben.

Die Heber 7 weisen neben der Liftplattform 14 einen seitlichen Tragmast 15 auf, an dem die Liftplattform 14 verfahren wird.

Nach der Erfindung erfolgt die Waren-Abgabe bzw. Aufnahme vom bzw. ins Lager 2 über einen gemeinsamen Lagerein- und Ausgang, d.h. Ein- und Auslagerförderer 8. Dieser ist ebenfalls behinderungsfrei durch seine Anbringung an der Decke der entsprechenden Ebene E angeordnet.

Der Ein- und Auslagerförderer 8 ist also in dieser Ebene E mit den Hebern 7 verbunden, so dass diese ihre Waren austauschen können. Es versteht sich, dass daher nicht jede Ebene mit einem Ein- und Auslagerförderer 8 ausgestattet sein muss.

Dazu ist der Ein- und Auslagerförderer 8 schleifenförmig ausgestaltet, wobei ein Ende 8A das Eingangsende und das andere Ende 8B das Ausgangsende darstellt, die jeweils das Fachbodenregallager 2 mit dem restlichen Verteilzentrum 1 verbinden.

Der Ein- und Auslagerförderer 8 ist über Auf- und Abgabestationen 16 mit dem Hebern 7 verbunden. Analog zu den Auf- und Abgabestationen 3, weisen die Auf- und Abgabestationen 16 ebenfalls einen kurzen Auslagerförderer 17 und einen kurzen Einlagerförderer 18 auf, die linear ausgerichtet sind und zwischen denen der Heber 7 angeordnet ist.

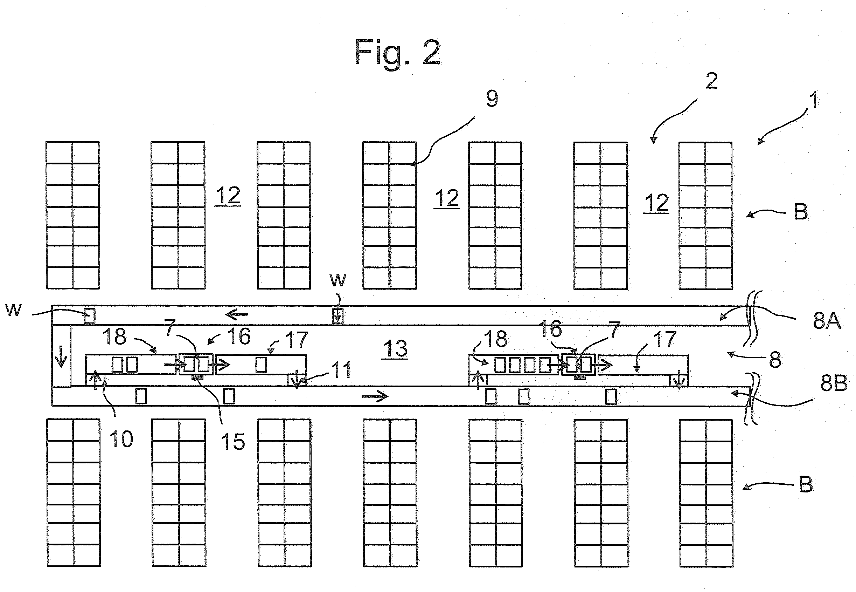

Zusätzlich sind die Auslagerförderer 17 und Einlagerförderer 18 jeweils über einen Querförderer 10, 11 an den Ein- und Auslagerförderer 8 angeschlossen (vgl. Figur 2).

Die Auf- und Abgabestationen 3 sind mit Scannern etc. ausgerüstet sein, so dass eine Ware nach der Abgabe vom Warenmanagementsystem, Leitsoftware usw. erkannt und dem Bedarf entsprechend weiterbehandelt wird. Analog sind die Auf- und Abgabestationen 16 mit Ausgaben, Anzeigen etc. ausgerüstet sein, die nach Abgabe eines Artikels vom Vertikalförderer an den Puffer, dem Kommissionier 6 Anweisungen geben, welche Ware W wohin muss.

## Patentansprüche

1. Verfahren zum Betreiben eines Lagers (2), bei dem ein Fachbodenregallager (9) mit einer Vielzahl von Ebenen (E) und Stellplätzen manuell von Kommissionierern (6) mit Waren (W) ver- und entsorgt wird, wobei an mindestens einem zentralen Übergabepunkt (3a) zwischen den Regalen (9) einer Ebene (E) eine Aufgabe und Abnahme von Waren (W) möglich ist, wobei die in unterschiedlichen Ebenen (E) angeordneten Übergabepunkte (3a) jeweils untereinander mittels Auf- und Abgabestationen (3) sowie mit einem gemeinsamen Lagerein- und Ausgang (8) fördertechnisch durch Vertikalförderer (7) verbunden sind, **dadurch gekennzeichnet, dass** mehrere Übergabepunkte (3a) pro Ebene (E) in einer zentralen Gasse (13) beabstandet angeordnet sind, zentrale Gasse heißt eine zwischen Regalblöcken angeordnete Gasse, von der wiederum einzelne Gassen zwischen einzelnen Regalen abgehen, wobei das Fachbodenregallager (9) manuell von Kommissionierern (6) ver- und entsorgt wird, die sich durch die Gassen (12, 13) bewegen und Waren (W) aus den Stellplätzen der Fachbodenregale (9) nehmen bzw. Waren (W) in diese hineinlegen, wobei die Auf- und Abgabestationen (3) eingangs- und ausgangsseitig eines Vertikalförderers (7) jeweils einen Puffer-Förderer (4, 5) aufweisen.

2. Verfahren nach Anspruch 1, **dadurch gekennzeichnet, dass** zur Verbindung der Übergabepunkte (3a) Vertikalförderer (7), insbesondere Heber eingesetzt werden.

3. Verfahren nach Anspruch 2, **dadurch gekennzeichnet, dass** die Vertikalförderer (7) gleichzeitig zwei Waren (W) tragen können.

4. Verfahren nach Anspruch 3, **dadurch gekennzeichnet, dass** die zwei Waren (W) unabhängig voneinander be- und entladen werden können.

5. Verfahren nach einem der vorhergehenden Ansprüche, **dadurch gekennzeichnet, dass** die Übergabepunkte (3a) gleichzeitig Waren (W) verund entsorgen können.

6. Verfahren nach einem der vorhergehenden Ansprüche, **dadurch gekennzeichnet, dass** der gemeinsame Lagerein- und Ausgang (8) für die Kommissionierer (6) behinderungsfrei angeordnet ist.

7. Manuelles Fachbodenregallager (2) zur Durchführung eines Verfahrens nach einem der vorhergehenden Ansprüche, mit einer Vielzahl von Ebenen (E) und Stellplätzen, die manuell von Kommissionierern (6) mit Waren (W) ver- und entsorgt werden, wobei in einer zentralen Gasse (13) zwischen den Regalen (9) einer Ebene (E) jeweils mindestens eine Auf- und Abgabestation (3) angeordnet ist, wobei die in unterschiedlichen Ebenen (E) angeordneten Aufund Abgabestationen (3) jeweils mittels eines Vertikalförderers (7) untereinander sowie mit einem gemeinsamen Ein- und Auslagerförderer (8) für das gesamte Fachbodenregallager (2) in einer Ebene (E) verbunden sind,
wobei die Auf- und Abgabestationen (3) eingangs- und ausgangsseitig des Vertikalförderers (7) jeweils einen Puffer-Förderer (4, 5) aufweisen.

8. Fachbodenregallager nach Anspruch 7, **dadurch gekennzeichnet, dass** mehrere Auf- und Abgabestationen (3) pro Ebene (E) in einer zentralen Gasse (13) beabstandet angeordnet sind.

9. Fachbodenregallager nach Anspruch 7 oder 8, **dadurch gekennzeichnet, dass** übereinanderliegende Auf- und Abgabestationen (3) unterschiedlicher Ebenen (E) mittels Vertikalförderer (7), insbesondere Heber verbunden sind.

10. Fachbodenregallager nach Anspruch 9, **dadurch gekennzeichnet, dass** die Hubplattformen (14) der Vertikalförderer (7) zwei Stellplätze (14A, B) aufweisen.

11. Fachbodenregallager nach Anspruch 10, **dadurch gekennzeichnet, dass** die zwei Stellplätze (14A, B) mit unabhängig voneinander verfahrbare Förderer aufweisen.

12. Fachbodenregallager nach einem der Ansprüche 7 bis 11, **dadurch gekennzeichnet, dass** der gemeinsame Ein- und Auslagerförderer (8) an der Ebenendecke angeordnet ist.

## Claims

1. Method for operating a storage facility (2), in which order pickers (6) manually place goods (W) into, or remove goods from, a modular shelving racking system (9) having a multiplicity of levels (E) and storage locations, wherein it is possible to place and remove goods (W) at at least one central transfer point (3a) between the shelves (9) of a level (E), wherein the transfer points (3a) arranged in different levels (E) are each connected to one another by means of placing and removing stations (3) and to a common storage entrance and exit (8) in respect of materials handling technology by vertical conveyors (7), **characterised in that** several transfer points (3a) per level (E) are arranged spaced apart from each other in a central aisle (13), "central aisle" referring to an aisle arranged between blocks of shelving, from which in turn individual aisles run off between individual shelves, wherein order pickers (6) manually place goods into, or remove goods from, the modular shelving racking system (9), said order pickers moving through the aisles (12, 13) and taking goods (W) from the storage locations of the modular shelves (9) or placing goods (W) therein, wherein the placing and removing stations (3) each have a buffer conveyor (4, 5) at the entrance and exit to a vertical conveyor (7).

2. Method as claimed in claim 1, **characterised in that** vertical conveyors (7), in particular elevators, are used to connect the transfer points (3a).

3. Method as claimed in claim 2, **characterised in that** the vertical conveyors (7) can carry two items of goods (W) at the same time.

4. Method as claimed in claim 3, **characterised in that** the two items of goods (W) can be loaded and unloaded independently of each other.

5. Method as claimed in any one of the preceding claims, **characterised in that** goods (W) can be placed into, and removed from, the transfer points (3a) at the same time.

6. Method as claimed in any one of the preceding claims, **characterised in that** the common storage entrance and exit (8) is arranged so as not to be a hindrance for the order pickers (6).

7. Manual modular shelving racking system (2) for carrying out a method as claimed in any one of the preceding claims, having a multiplicity of levels (E) and storage locations, into which goods (W) are placed, or from which goods are removed, manually by order pickers (6), wherein at least one placing and removing station (3) is arranged in each case in a central aisle (13) between the shelves (9) of a level (E), wherein the placing and removing stations (3) arranged in different levels (E) are each connected to each other and to a common incoming and outgoing conveyor (8) by means of a vertical conveyor (7) for the entire modular shelving racking system (2) in a level (E), wherein the placing and removing stations (3) each have a buffer conveyor (4, 5) at the entrance and exit to the vertical conveyor (7).

8. Modular shelving racking system as claimed in claim 7, **characterised in that** several placing and removing stations (3) per level (E) are arranged spaced apart from each other in a central aisle (13).

9. Modular shelving racking system as claimed in claim 7 or 8, **characterised in that** placing and removing stations (3) located one above another on different levels (E) are connected by means of vertical conveyors (7), in particular elevators.

10. Modular shelving racking system as claimed in claim 9, **characterised in that** the lift platforms (14) of the vertical conveyors (7) comprise two storage locations (14A, B).

11. Modular shelving racking system as claimed in claim 10, **characterised in that** the two storage locations (14A, B) have conveyors which can move independently of each other.

12. Modular shelving racking system as claimed in any one of claims 7 to 11, **characterised in that** the common incoming and outgoing conveyor (8) is arranged on the ceiling of a level.

## Revendications

1. Procédé d'exploitation d'un magasin (2), dans lequel le stockage et le déstockage de marchandises (W) sont effectués manuellement par des préparateurs de commandes (6) au niveau d'un rayonnage à fond compartimenté (9) comprenant plusieurs niveaux (E) et emplacements de stockage, le chargement et le déchargement de marchandises (W) étant possibles en au moins un point de transfert central (3a) entre les rayonnages (9) d'un niveau (E), les points de transfert (3a) disposés à différents niveaux (E) étant reliés entre eux par des stations de chargement et déchargement (3) ainsi qu'à une entrée et une sortie de magasin communes (8) par une technique de transport au moyen de convoyeurs verticaux (7), **caractérisé en ce que** plusieurs points de transfert (3a) par niveau (E) sont disposés de façon espacée dans une allée centrale (13), **en ce qu'**une allée centrale est une allée disposée entre des blocs de rayonnages de laquelle partent là encore des allées individuelles entre des rayonnages individuels, le stockage et le déstockage étant effectués manuellement dans un magasin à rayonnages à sol plat (9) par des préparateurs de commandes (6) qui se déplacent dans les allées (12, 13) et prennent des marchandises (W) des emplacements de stockage des rayonnages à fond compartimenté (9) ou introduisent des marchandises (W) dans ceux-ci, les stations de chargement et déchargement (3) comportant chacune en entrée et en sortie d'un convoyeur vertical (7) un convoyeur tampon (4, 5).

2. Procédé selon la revendication 1, **caractérisé en ce qu'**un convoyeur vertical (7), en particulier un élévateur, est utilisé pour le raccordement des points de transfert (3a).

3. Procédé selon la revendication 2, **caractérisé en ce que** le convoyeur vertical (7) peut porter simultanément deux marchandises (W).

4. Procédé selon la revendication 3, **caractérisé en ce que** les deux marchandises (W) peuvent être chargées et déchargées indépendamment l'une de l'autre.

5. Procédé selon l'une des revendications précédentes, **caractérisé en ce que** les points de transfert (3a) peuvent effectuer simultanément le stockage et le déstockage de marchandises (W).

6. Procédé selon l'une des revendications précédentes, **caractérisé en ce que** l'entrée et la sortie de magasin communes (8) sont disposées de façon à ne pas gêner les préparateurs de commandes (6).

7. Rayonnage manuelle à fond compartimenté (2), destiné à mettre en oeuvre un procédé selon l'une des revendications précédentes, comprenant une pluralité de niveaux (E) et d'emplacements de stockage, au niveau desquels le stockage et le déstockage de marchandises (W) sont effectués manuellement par des préparateurs de commandes (6), au moins une station de chargement et de déchargement (3) étant disposée dans une allée centrale (13) située entre les rayonnages (9) d'un niveau (E), les stations de chargement et de déchargement (3) étant reliées entre elles au moyen d'un convoyeur vertical (7) ainsi qu'à un convoyeur de stockage et déstockage commun (8) destiné à tout le magasin à rayonnages à fond compartimenté (2) à un niveau (E), les stations de chargement et déchargement (3) comportant chacune en entrée et en sortie du convoyeur vertical (7) un convoyeur tampon (4, 5).

8. Magasin à rayonnages à fond compartimenté selon la revendication 7, **caractérisé en ce que** plusieurs stations de chargement et déchargement (3) par niveau (E) sont disposées à distance dans une allée centrale (13).

9. Magasin à rayonnages à fond compartimenté selon l'une des revendications 7 ou 8, **caractérisé en ce que** des stations de chargement et déchargement superposés (3) de différents niveaux (E) sont reliées au moyen d'un convoyeur vertical (7), en particulier d'élévateur.

10. Magasin à rayonnages à fond compartimenté selon la revendication 9, **caractérisé en ce que** les plates-formes élévatrices (14) du convoyeur vertical (7) comportent deux emplacements de stockage (14A, B).

11. Magasin à rayonnages à fond compartimenté selon la revendication 10, **caractérisé en ce que** les deux emplacements de stockage (14A, B) comportent chacun un convoyeur mobile de façon indépendante.

12. Magasin à rayonnages à fond compartimenté selon l'une des revendications 7 à 11, **caractérisé en ce que** le convoyeur d'entrée et de sortie commun (8) est disposé sur le plafond de niveau.
